Europäisches Patentamt

European Patent Office

Office européen des brevets

(19)

(11) **EP 1 241 818 A1**

(12) **EUROPEAN PATENT APPLICATION**
published in accordance with Art. 158(3) EPC

(43) Date of publication:
**18.09.2002 Bulletin 2002/38**

(51) Int Cl.⁷: **H04J 13/04**, H04B 1/707,
H04L 27/22

(21) Application number: **01979032.8**

(22) Date of filing: **06.11.2001**

(86) International application number:
**PCT/JP01/09693**

(87) International publication number:
**WO 02/039634 (16.05.2002 Gazette 2002/20)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **07.11.2000 JP 2000338965**

(71) Applicant: **MATSUSHITA ELECTRIC INDUSTRIAL
CO., LTD.
Kadoma-shi, Osaka 571-8501 (JP)**

(72) Inventor: **NAKANO, Takayuki
Yokosuka-shi, Kanagawa 239-0842 (JP)**

(74) Representative: **Grünecker, Kinkeldey,
Stockmair & Schwanhäusser Anwaltssozietät
Maximilianstrasse 58
80538 München (DE)**

(54) **RECEIVER APPARATUS AND METHOD FOR CONTROLLING REFERENCE FREQUENCY IN THE RECEIVER APPARATUS**

(57)     A received signal is subjected to an orthogonal demodulation in orthogonal demodulating section 102, the signal undergone orthogonal demodulation is converted into digital signal in A/D converting sections 103a and 103b, that digital signal is then despread in despreading sections 104a and 104b, the frequency error which is used as an output is calculated by adding the frequency error of the despread signal in frequency error calculating section 105 for a set number-of-times, the frequency control value is updated in frequency control value updating section based on the calculated frequency error, the reference frequency signal corresponding to the updated frequency control value is outputted by voltage control oscillator 107. At that time, the power of the signal which is subjected to orthogonal demodulation is calculated in power calculating section 108, the frequency error in frequency error calculating section 105 that is corresponds to the calculated power and which is added for a number-of-times is changed in addition number-of-times calculating section 109, and the frequency control interval is changed. Thus, the time until a frequency control value approaches the last stable value can be shortened, and transmission/reception quality can be improved.

FIG.4

EP 1 241 818 A1

**Description**

Technical Field

The present invention relates to a receiving apparatus and a reference frequency control method in the respective receiving apparatus.

Background Art

In recent years, demands for terrestrial mobile communication services such as mobile telephone, cellular phone, etc. have been remarkably increased, and the technology to use frequency efficiently for accommodating large user capacity over a limited frequency bandwidth becomes an important technology.

CDMA (Code Division Multiple Access) method attracts attention as one of the multiple access method for the technology to use frequency efficiently. A CDMA method is a multiple access method that uses spread spectrum communication technology in which it is possible to achieve superior communication quality and flexible high speed data communication. The U.S. Patent No. 4,901,307 serves as an example of a mobile communication system based on CDMA technology.

In a mobile handset apparatus of a mobile communication system, a method for automatically adjusting the reference frequency to base station reference frequency that is used by Automatic Frequency Control (AFC) circuit which is inside the mobile handset apparatus has been generally used. The Japanese Patent No. 2728034 serves as an example of an AFC circuit which is used in a CDMA system.

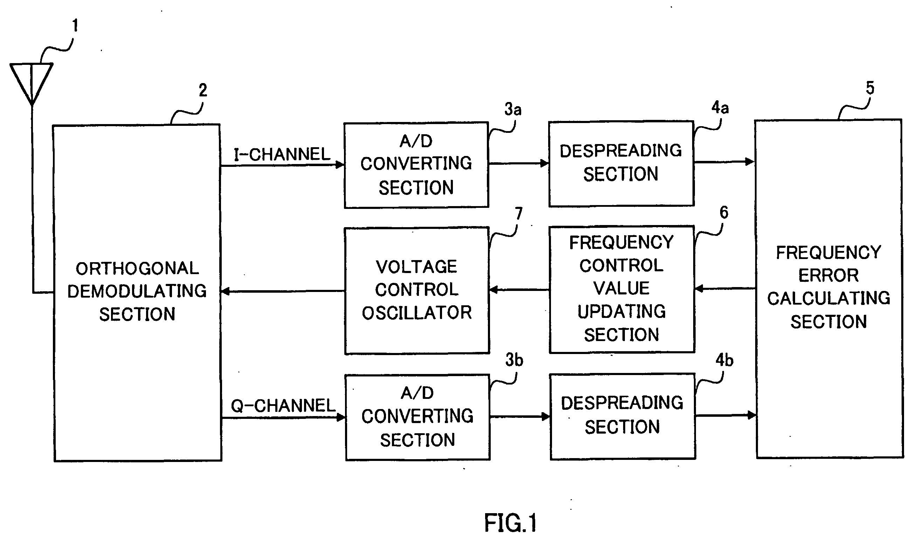

FIG. 1 is a block diagram showing a configuration of a conventional receiving apparatus.

Orthogonal demodulating section 2 performs orthogonal demodulation of a signal received by antenna 1.

A/D converting section 3a converts the analog signal of I-channel subjected to orthogonal demodulation by orthogonal demodulating section 2 into a digital signal, and A/D converting section 3b converts the analog signal of Q-channel subjected to orthogonal demodulation by orthogonal demodulating section 2 into a digital signal.

Despreading section 4a despreads the signal digitally converted by A/D converting section 3a, and despreading section 4b despreads the signal digitally converted by A/D converting section 3b.

Frequency error calculating section 5 calculates the frequency error, to be described later, using both Q-signal spread by spreading section 4b and I-signal spread by spreading section 4a.

Frequency control value updating section 6 updates a frequency control value based on the frequency error obtained by frequency error calculating section 5.

Voltage control oscillator 7 generates a reference frequency signal according to frequency control value updated by frequency control value updating section 6, and outputs the generated signal to orthogonal demodulating section 2.

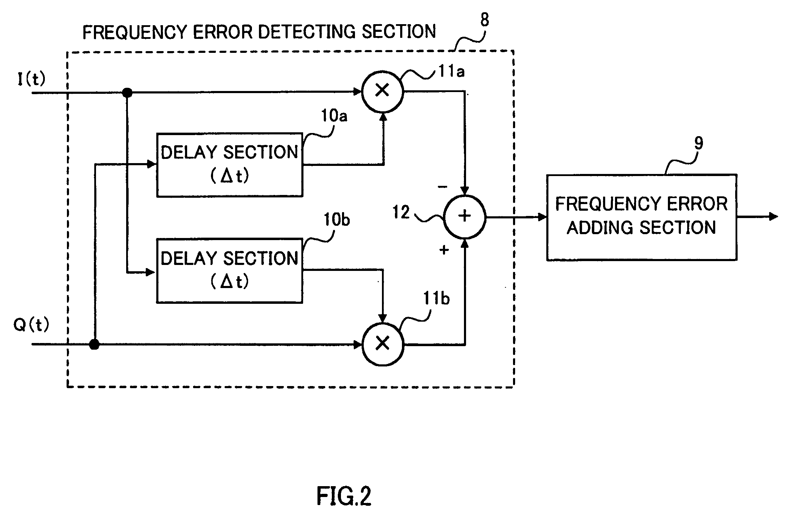

As shown in FIG. 2, frequency error calculating section 5 further comprises frequency error detecting section 8 that detects the frequency error and frequency error adding section 9 that adds the detected frequency error.

Frequency error detecting section 8 provided with delay section 10a which delays the Q-signal Q(t) only by a previously determined period $\Delta t$ (delay amount), delay section 10b which delays the I-signal I(t) only by the aforementioned period $\Delta t$, multiplier 11a which multiplies the I-signal I(t) by a Q-signal Q(t-$\Delta t$) delayed in delay section 10a, multiplier 11b which multiplies the Q-signal Q(t) by an I-signal I(t-$\Delta t$) delayed in delay section 10b, and subtractor 12 which obtains the difference of the outputs of multipliers 11a and 11b.

Frequency error adding section 9 performs a set number of addition of the frequency error detected by frequency error detecting section 8.

The operation of frequency error calculating section 5 having the aforementioned configuration will be explained below.

In a mobile communication system based on CDMA technology, an unmodulated channel known as a pilot channel which is used to synchronize in receiving apparatus is transmitted.

The I-signal I(t) and Q-signal Q(t) which are obtained after despreading that pilot channel are shown in equation (1) and equation (2), below

$$I(t) = A \cdot \cos\phi(t) \tag{1}$$

$$Q(t) = A \cdot \sin\phi(t) \tag{2},$$

where A represents the amplitude and $\ddot{o}$(t) represents the carrier phase.

Moreover, both signals I(t) and Q(t) are delayed only by a period Δt, each one of the delayed signals I(t-Δt) and Q(t-Δt) is subjected to a cross-multiplication process, and if considering the calculation to subtract one of this multiplication result from the other, then the following equation is obtained

$$
-I(t) \cdot Q(t-\Delta t) + Q(t) \cdot I(t-\Delta t)
$$
$$
= -A^2 \cdot \cos\phi(t) \cdot \sin\phi(t-\Delta t)
$$
$$
+ A^2 \cdot \sin\phi(t) \cdot \cos\phi(t-\Delta t)
$$
$$
= A^2 \cdot \sin\{\phi(t) - \phi(t-\Delta t)\}
$$
$$
= A^2 \cdot \sin\{\Delta\phi(t)\} \quad \cdots (3),
$$

where $\Delta\phi(t) = \phi(t) - \phi(t-\Delta t)$.

Since the above $\Delta\phi(t)$ is practically small and the approximation $\sin\{\Delta\phi(t)\}$ $\Delta\phi(t)$ is applied, it is possible to say that equation (3) is equivalent to the rotation amount of the carrier phase. In the present invention, the rotation amount of the carrier phase is simply referred to as a frequency error.

The calculation of equation (3) is performed by frequency error detecting section 8 which has the aforementioned configuration.

However, it is assumed that the interference components in the I-signal I(t) and Q-signal Q(t) which are obtained after despreading the pilot channel are not considered in the above calculation, frequency error detecting section 8 cannot obtain the correct frequency error since, in practical point of view, interference components are exist.

Frequency error which is detected by frequency error detecting section 8 is subjected to an addition process of a set number in frequency error adding section 9. Thus, it is possible to obtain frequency error with high reliability because the effects of interference components can be reduced relatively.

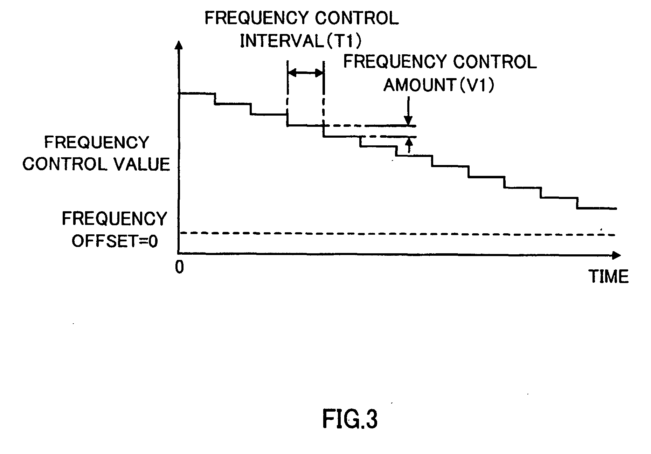

An example of an updated frequency control value in the aforementioned configurationwhich is varied with time is shown in FIG.3. In such a case, the frequency control value is updated by a frequency control step (±V1) in frequency control value updating section 6 based on positive/negative of frequency error calculated in frequency error calculating section 5 every frequency control period (T1) as shown in FIG. 3.

However, in the conventional apparatus, when long frequency control interval (T1) is set in order to increase the detection accuracy of frequency error as the frequency control interval (T1) and frequency control step (V1) are both fixed values, or when a small frequency control step (V1) is set in order to reduce the error of the last stable value of the frequency control, there is a problem that the time of converging the frequency control values until approaching a last stable value (frequency offset = 0) will increase. Consequently, a problem of deteriorating the transmission quality is occurred because the time to approach a stable reference frequency becomes long.

Disclosure of the Invention

It is an object of the present invention to introduce a receiving apparatus and a reference frequency control method in the receiving apparatus that can improve the transmission/reception quality by shortening an interval until the frequency control value approaches the last stable value.

According to an aspect of the present invention, a receiving apparatus comprises frequency error calculating section that calculates a frequency error using a received signal, frequency control value updating section that updates a frequency control value to control a reference frequency, based on the frequency error calculated by the frequency error calculating section, and frequency control interval setting section that sets a frequency control interval which is used when the frequency control value is updated by the frequency control value updating section, wherein the frequency control value updating section performs the updating processing of the frequency control value based on the frequency error using the frequency control interval set by the frequency control interval setting section.

Preferably, the aforementioned receiving apparatus further comprises strength calculating section to calculate strength of the received signal, wherein the frequency error calculating section calculates an output frequency error by adding a frequency error used for addition which is obtained from the received signal using a set addition number-of-times, and the frequency control interval setting section sets the frequency control interval according to the set addition number-of-times by means of setting an addition number-of-times of the frequency error used for addition which is used when the output frequency error is calculated by the frequency error calculating section, according to the strength of the received signal calculated by the strength calculating section.

Moreover, preferably, in the aforementioned receiving apparatus, the frequency error calculating section calculates an output frequency error by adding a frequency error used for addition which is obtained from the received signal using a set addition number-of-times, and the frequency control interval setting section sets the frequency control interval according to the set addition number-of-times by means of setting an addition number-of-times of the frequency error used for addition which is used when the output frequency error is calculated by the frequency error calculating section, according to the frequency error outputted from the frequency error calculating section.

Furthermore, preferably, in the aforementioned receiving apparatus, the frequency error calculating section performs calculation processing of the frequency error using a set delay amount, and the frequency control interval setting section sets the frequency control interval according to the set delay amount by means of setting a delay amount which is used when the frequency error is calculated by the frequency error calculating section, according to the frequency error calculated by the frequency error calculating section.

According to another aspect of the present invention, a receiving apparatus comprises frequency error calculating section that calculates a frequency error using a received signal, frequency control value updating section that updates a frequency control value to control a reference frequency, based on the frequency error calculated by the frequency error calculating section, and frequency control amount setting section that sets a frequency control amount which is used when the frequency control value updating section updates the frequency control value, according to the frequency error calculated by the frequency error calculating section, wherein the frequency control value updating section carries out updating processing of the frequency control value based on the frequency error using frequency control amount set by the frequency control amount setting section.

Brief Description of the Drawings

FIG. 1 is a block diagram showing a configuration of a conventional receiving apparatus;

FIG. 2 is a block diagram showing a configuration of a frequency error calculating section shown in FIG. 1;

FIG. 3 is an exemplary graph illustrating a variation of a frequency control value with time when both frequency control interval and frequency control amount are fixed;

FIG. 4 is a block diagram showing a configuration of a receiving apparatus according to Embodiment 1 of the present invention;

FIG. 5 is an exemplary graph illustrating a variation of a frequency control value with time in case of variable frequency control interval;

FIG. 6 is a block diagram showing a configuration of a receiving apparatus according to Embodiment 2 of the present invention;

FIG. 7 is an exemplary graph illustrating a variation of a frequency control value with time in case of variable frequency control amount; and

FIG. 8 is a block diagram showing a configuration of a receiving apparatus according to Embodiment 3 of the present invention.

Best Mode for Carrying out the Invention

Embodiments of the present invention will hereinafter be specifically described with reference to the accompanying drawings.

(Embodiment 1)

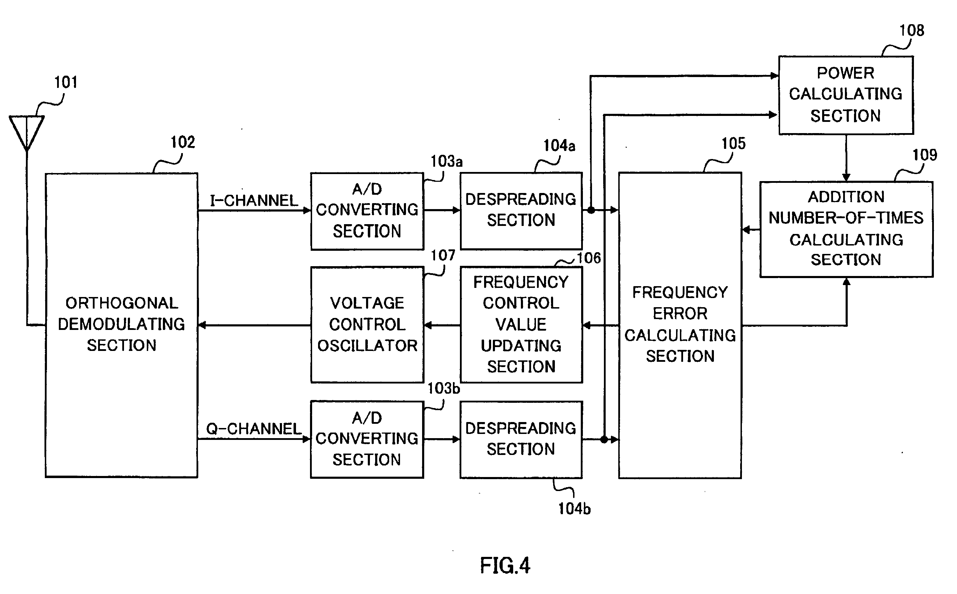

FIG. 4 is a block diagram showing a configuration of a receiving apparatus according to Embodiment 1 of the present invention.

In the receiving apparatus according to the present embodiment, frequency control value is updated when frequency control interval is varied according to power level or frequency error amount.

The receiving apparatus comprises antenna 101, orthogonal demodulating section 102, A/D converting sections 103a and 103b, despreading sections 104a and 104b, frequency error calculating section 105, frequency control value updating section 106, voltage control oscillator 107, power calculating section 108 and addition number-of-times calculating section 109.

orthogonal demodulating section 102 performs orthogonal demodulation on the signal received by antenna 101.

A/D converting section 103a converts the analog signal of I-channel which is subjected to orthogonal demodulation in orthogonal demodulating section 102 into digital signal, and A/D converting section 103b converts the analog signal of Q-channel which is subjected to orthogonal demodulation in orthogonal demodulating section 102 into digital signal.

Despreading section 104a despreads the signal digitally converted in A/D converting section 103a, and despreading section 104b despreads the signal digitally converted in A/D converting section 103b.

Frequency error calculating section 105 which has a configuration similar to frequency error calculating section 5 in the aforementioned conventional receiving apparatus (refer to FIG. 2) calculates the frequency error defined by the aforementioned equation (3) using both I-signal despread in despreading section 104a and Q-signal despread in despreading section 104b.

Frequency control value updating section 106 updates the frequency control value based on frequency error obtained from frequency error calculating section 105. Voltage control oscillator 107 generates a reference frequency signal according to frequency control value updated in frequency control value updating section 106 and outputs the result to orthogonal demodulating section 102.

Power calculating section 108 calculates the strength (power) of both I-signal outputted from despreading section 104a and Q-signal outputted from despreading section 104b. Specifically, collecting the strength (power) of both I- and Q-signals of every path and then calculating the average or the sum thereof.

Addition number-of-times calculating section 109 calculates the addition number-of-times of frequency error according to frequency error obtained from frequency error calculating section 105 or the power obtained from power calculating section 108. Specifically, when the power obtained from power calculating section 108 is large, a small addition number-of-times of frequency error is calculated in correspondence with such a power level, while if the aforementioned power is small, a large addition number-of-times of frequency error is calculated in correspondence with such a power level. In addition, when the frequency error obtained from frequency error calculating section 105 is large, a small addition number-of-times of frequency error is calculated in correspondence with such a frequency error amount, while if the aforementioned frequency error is small, a large addition number-of-times of frequency error is calculated in correspondence with such a frequency error amount. Then, the calculated addition number-of-times of frequency error is outputted, and the addition number-of-times of frequency error adding section 9 in frequency error calculating section 105 is controlled. Moreover, at the time of updating the frequency control value by frequency control value updating section 106, the frequency control interval is in proportion not only to the addition number-of-times which is in frequency error adding section 9 of frequency error calculating section 105 but also to the output interval of frequency error calculating section 105.

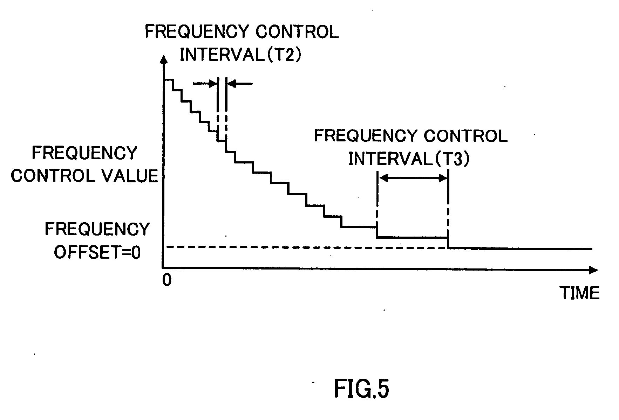

Next, operation of the receiving apparatus which has the aforementioned configuration will be explained using FIG. 5. FIG. 5 illustrates an exemplary graph of a time-based variation in frequency control value updated by the aforementioned configuration.

Although the frequency error which is obtained from frequency error detecting section 8 is given in the aforementioned equation (3), but, when considering the interference component 1(t), the frequency error is given now as shown in the following equation (4)

$$\text{Frequency error} = A^2 \cdot \sin \{\Delta\phi \,(t)\} + I \,(t) \tag{4}.$$

Frequency error adding section 9 adds the frequency error detected in frequency error detecting section 8 only for the addition number-of-times set in addition number-of-times calculating section 109 so that the influence of interference component I(t) may become sufficiently small compared with the original frequency error component.

Here, considering the case where the received power $A^2$ obtained from power calculating section 108 is large, the influence of interference component I(t) is reduced by a small addition number-of-times because the original frequency error component from the beginning is larger than the interference component I(t). Thus, even when the adding number-of-times of frequency error is set small, it is possible to obtain a frequency error with high reliability.

In addition, the frequency error control interval can be shortened by similarly setting a small frequency error addition number-of-times because the original frequency error component is larger than the interference component I(t) when the frequency error is large.

In other words, when the received power is high or when frequency error is large as shown in FIG. 5, it is possible to set a short frequency control interval (refer to T2 in FIG. 5) as long as the frequency error is large.

Thus, according to the receiving apparatus of Embodiment 1, when the received power is high or when frequency error is large, it is possible to shorten an interval until the frequency control value approaches the last stable value because the frequency control interval is made possible to be shortened by variable controlling of addition number of times. Thus, it is possible to shorten the interval until stabilizing the reference frequency and hence, improving the transmission/reception quality.

(Embodiment 2)

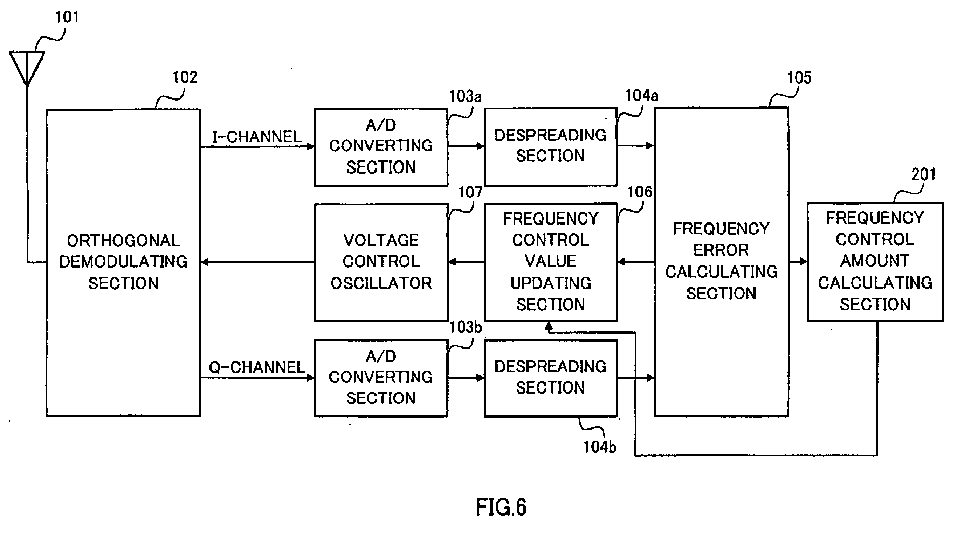

FIG. 6 is a block diagram showing a configuration of a receiving apparatus according to Embodiment 2 of the present invention. However, the corresponding similar components shown in FIG. 4 are assigned the same reference numerals and explanations thereof are omitted.

In the receiving apparatus according to the present embodiment, frequency control amount is changed according to frequency error when updating the frequency control value.

In addition to sections 101-106 in the configuration shown in FIG. 4, the corresponding receiving apparatus is provided with frequency control amount calculating section 201.

Frequency control amount calculating section 201 determines control amount (i.e., frequency control amount) which is used when frequency control value updating section 106 updates frequency control value based on frequency error calculated in frequency error calculating section 105.

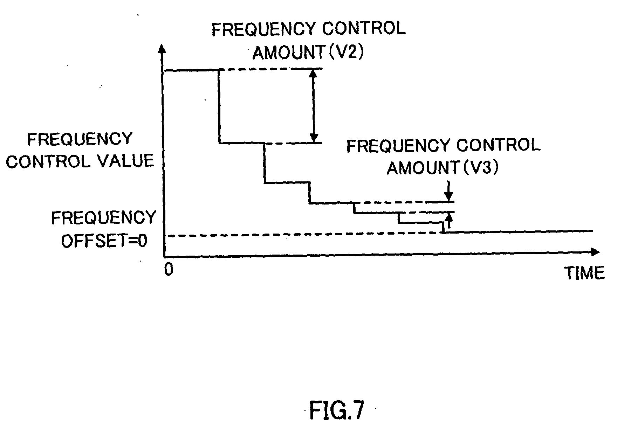

Next, the determining method of such a frequency control amount will be explained using FIG. 7.

FIG. 7 is an exemplary graph illustrating a time-based variation in frequency control value updated by the configuration of Embodiment 2.

The frequency error which is obtained in frequency error detecting section 8 is calculated by the aforementioned equation (4). When frequency error is large, the frequency error calculated in the latter frequency error adding section 9 becomes large.

When the calculated frequency error is large, the frequency control amount is set large (refer to V2 in FIG. 7) in frequency control value updating section 106. Thus, it is possible to increase the speed near to last stable value of the frequency control value. Moreover, when the frequency error calculated in frequency error adding section 9 is small, the frequency control amount is set small (refer to V3 in FIG. 7). Thus, the stability of frequency control value can be improved.

Therefore, according to the receiving apparatus of Embodiment 2, since the frequency control amount is set large when frequency control value is largely separated from the last stable value and frequency control amount is set small when frequency control value is near to last stable value, it is possible to shorten the interval until stabilizing the reference frequency and improve the stability within the interval of approaching the last value. Hence, possibly improving the transmission/reception quality.

(Embodiment 3)

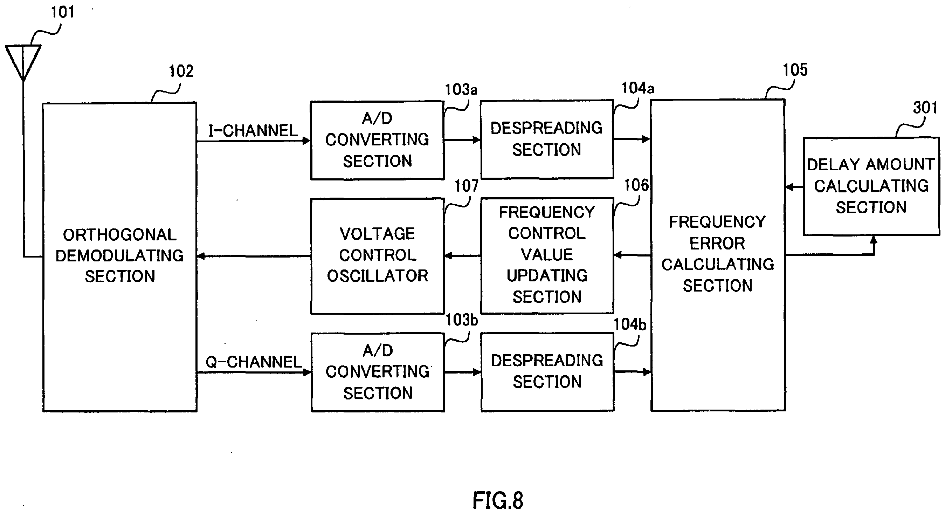

FIG. 8 is a block diagram showing a configuration of a receiving apparatus according to Embodiment 3 of the present invention. However, the corresponding similar components shown in FIG. 4 are assigned the same reference numerals and explanations thereof are omitted.

In the receiving apparatus according to Embodiment 3, when calculating the frequency error, a delay amount is changed according to that frequency error.

In addition to sections 101-106 in the configuration shown in FIG. 4, the corresponding receiving apparatus is provided with delay amount calculating section 301.

Delay amount calculating section 301 determines the amount of delay when calculating the frequency error according to frequency error from frequency error calculating section 105.

The delay amount determining method will be explained hereinafter. The frequency error which is calculated in frequency error detecting section 8 is calculated by the aforementioned equation (4). In the case when the frequency error that is obtained in frequency error adding section 9 is large, it is possible to shorten the frequency control interval by setting a small delay amount $\Delta t$ because the interference component $I(t)$ may be small even if the setting of the delay amount $\Delta t$ of delay sections 10a and 10b is small.

Therefore, according to the receiving apparatus of Embodiment 3, because the delay amount $\Delta t$ is set small and frequency error is large when frequency control value is largely away from the last stable value, frequency control interval becomes short even in the case when frequency error addition number-of-times is made a fixed value in frequency error adding section 9, and as shown in FIG. 5, it is possible to shorten the interval until the frequency control value approaches a last stable value. Hence, possibly improving the transmission/reception quality.

Furthermore, the receiving apparatus given in either of the aforementioned Embodiment 1 to Embodiment 3 can be simultaneously executed, and can be also similarly carried out in a mobile station apparatus.

The present application is based on the Japanese Patent Application No. 2000-338965 filed on Nov. 7, 2000, entire content of which is expressly incorporated by reference herein.

Industrial Applicability

The present invention is applicable to a receiving apparatus and to reference frequency control method in the respective receiving apparatus provided in a base station or terminal apparatus (mobile station, etc.) in a mobile communication system which uses CDMA techniques.

**Claims**

1. A receiving apparatus comprising:

   frequency error calculating section that calculates a frequency error using a received signal;
   frequency control value updating section that updates a frequency control value to control a reference frequency, based on the frequency error calculated by said frequency error calculating section; and
   frequency control interval setting section that sets a frequency control interval which is used when the frequency control value is updated by said frequency control value updating section,

   wherein the frequency control value updating section performs the updating processing of the frequency control value based on the frequency error using the frequency control interval set by said frequency control interval setting section.

2. The receiving apparatus according to claim 1 further comprising strength calculating section that calculates strength of the received signal,
   wherein said frequency error calculating section calculates an output frequency error by adding a frequency error used for addition which is obtained from the received signal using a set addition number-of-times, and
   wherein said frequency control interval setting section sets the frequency control interval according to the set addition number-of-times by means of setting an addition number-of-times of the frequency error used for addition which is used when the output frequency error is calculated by said frequency error calculating section, according to the strength of the received signal calculated by said strength calculating section.

3. The receiving apparatus according to claim 1,
   wherein said frequency error calculating section calculates an output frequency error by adding a frequency error used for addition which is obtained from the received signal using a set addition number-of-times, and
   wherein said frequency control interval setting section sets the frequency control interval according to the set addition number-of-times by means of setting an addition number-of-times of the frequency error used for addition which is used when the output frequency error is calculated by said frequency error calculating section, according to the frequency error outputted from said frequency error calculating section.

4. A receiving apparatus comprising:

   frequency error calculating section that calculates a frequency error using a received signal;
   frequency control value updating section that updates a frequency control value to control a reference frequency, based on the frequency error calculated by said frequency error calculating section; and
   frequency control amount setting section that sets a frequency control amount which is used when said frequency control value updating section updates the frequency control value, according to the frequency error calculated by said frequency error calculating section,

   wherein said frequency control value updating section carries out updating processing of the frequency control value based on the frequency error using frequency control amount set by said frequency control amount setting section.

5. The receiving apparatus according to claim 1,
   wherein said frequency error calculating section performs calculation processing of the frequency error using a set delay amount, and
   wherein said frequency control interval setting section sets the frequency control interval according to the set delay amount by means of setting a delay amount which is used when the frequency error is calculated by said frequency error calculating section, according to the frequency error calculated by said frequency error calculating section.

6. A mobile station apparatus provided with the receiving apparatus according to any claim from claim 1 through claim 4.

7. A reference frequency controlling method in a receiving apparatus comprising:

a frequency error calculating step of calculating a frequency error using a received signal;
a frequency control value updating step of updating a frequency control value to control a reference frequency, based on the frequency error calculated in said frequency error calculating step; and
a frequency control interval setting step of setting a frequency control interval which is used when the frequency control value is updated by said frequency control value updating step,

wherein said frequency control value updating step carries out updating processing of the frequency control value based on the frequency error using the frequency control interval set in said frequency control interval setting step.

8. A reference frequency control method in a receiving apparatus comprising:

a frequency error calculating step of calculating a frequency error using a received signal;
a frequency control value updating step of updating a frequency control value to control a reference frequency, based on the frequency error calculated in said frequency error calculating step; and
a frequency control amount setting step of setting a frequency control amount which is used when said frequency control value updating step updates the frequency control value, according to the frequency error calculated in said frequency error calculating step,

wherein said frequency control value updating step carries out updating processing of the frequency control value based on frequency error using frequency control amount set in said frequency control amount setting step.

FIG.1

FREQUENCY ERROR DETECTING SECTION 8

I(t)

DELAY SECTION (Δt) 10a

DELAY SECTION (Δt) 10b

11a ⊗

11b ⊗

Q(t)

12 ⊕ −
    +

9
FREQUENCY ERROR ADDING SECTION

FIG.2

EP 1 241 818 A1

FIG.3

FIG.4

EP 1 241 818 A1

FIG.5

FIG.6

EP 1 241 818 A1

FIG.7

EP 1 241 818 A1

**FIG.8**

- 301 DELAY AMOUNT CALCULATING SECTION
- 105 FREQUENCY ERROR CALCULATING SECTION
- 104a DESPREADING SECTION
- 106 FREQUENCY CONTROL VALUE UPDATING SECTION
- 104b DESPREADING SECTION
- 103a A/D CONVERTING SECTION
- 107 VOLTAGE CONTROL OSCILLATOR
- 103b A/D CONVERTING SECTION
- I-CHANNEL
- Q-CHANNEL
- 102 ORTHOGONAL DEMODULATING SECTION
- 101

16

**INTERNATIONAL SEARCH REPORT**

| International application No. |
|---|
| PCT/JP01/09693 |

**A. CLASSIFICATION OF SUBJECT MATTER**
Int.Cl$^7$  H04J13/04, H04B1/707, H04L27/22

According to International Patent Classification (IPC) or to both national classification and IPC

**B. FIELDS SEARCHED**

Minimum documentation searched (classification system followed by classification symbols)
Int.Cl$^7$  H04B1/69-1/713, H04J13/00-13/06,
H04L27/00-27/38

Documentation searched other than minimum documentation to the extent that such documents are included in the fields searched
Jitsuyo Shinan Koho        1926-1996     Toroku Jitsuyo Shinan Koho  1994-2001
Kokai Jitsuyo Shinan Koho  1971-2001     Jitsuyo Shinan Toroku Koho  1996-2001

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
|---|---|---|
| X | JP 10-112696 A (Oki Electric Industry Co., Ltd.), 28 April, 1998 (28.04.1998), | 1-4,6-8 |
| Y | page 8, Column 13, line 1 to page 9, Column 16, line 28; Figs. 4, 5   (Family: none) | 5 |
| X | JP 2-222343 A (Japan Radio Co., Ltd.), | 1-3,6,7 |
| Y | 05 September, 1990 (05.09.1990), | 5 |
| A | Full text; all drawings   (Family: none) | 4,8 |
| X | JP 7-86925 A (NEC Corporation), | 4,6,8 |
| A | 31 March, 1995 (31.03.1995), Full text; all drawings   (Family: none) | 1-3,5,7 |
| Y | Yasuaki TOUDA, et. al., Cross Products kei Shuhasu Benbetsuki wo mochiita AFC Kairo no Densou Tokusei, Denshi Joho Tsushin Gakkai Gijutsu Kenkyu Hokoku, Vol.99, No.46, SAT99-16, 1999.05.14, pp.15-19 | 5 |
| A | JP 9-8699 A (NEC Corporation), 10 January, 1997 (10.01.1997), Full text; all drawings | 1-8 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 January, 2002 (09.01.02) | 22 January, 2002 (22.01.02) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

International application No.

PCT/JP01/09693

| C (Continuation). DOCUMENTS CONSIDERED TO BE RELEVANT | | |
|---|---|---|
| Category* | Citation of document, with indication, where appropriate, of the relevant passages | Relevant to claim No. |
| | & AU 5461696 A      & EP 749213 A2<br>& CN 1146104 A      & AU 696824 B<br>& KR 201973 B      & US 6104748 A1 | |
| PA | JP 2001-24727 A (Mitsubishi Electric Corporation),<br>26 January, 2001 (26.01.2001),<br>Par. Nos. [0045] to [0046]<br>& WO 01/05110 A1      & EP 1113636 A1<br>& AU 200057082 A      & JP 3190318 B2 | 1-8 |
| PA | JP 2001-24528 A (Matsushita Electric Ind. Co., Ltd.),<br>26 January, 2001 (26.01.2001),<br>Full text; all drawings<br>& WO 01/03348 A1      & EP 1111830 A1<br>& AU 200057052 A | 1-8 |

Form PCT/ISA/210 (continuation of second sheet) (July 1992)